# EUROPEAN PATENT APPLICATION

(11) **EP 4 726 840 A1**
(43) Date of publication of application: **15.04.2026**
(21) Application number: 24845546.1
(22) Date of filing: 19.07.2024
(51) Int. Cl.: H01M 10/0569, H01M 4/38, H01M 10/052, H01M 10/058

(54) **NONAQUEOUS ELECTROLYTE POWER STORAGE ELEMENT AND METHOD FOR MANUFACTURING SAME**

(30) Priority: 21.07.2023 JP 2023119411
(71) Applicant: GS Yuasa International Ltd., Kisshoin, Minami-ku, Kyoto-shi, Kyoto 601-8520 (JP)
(72) Inventor: HARADA, Ryo, Kyoto-shi, Kyoto 601-8520 (JP); MIZUNO, Yusuke, Kyoto-shi, Kyoto 601-8520 (JP)
(74) Representative: Isarpatent
(86) International application number: PCT/JP2024/025913
(87) International publication number: WO 2025/023169

(57) **Abstract**

A nonaqueous electrolyte energy storage device according to one aspect of the present invention includes a positive electrode containing a composite of a sulfur active material and porous carbon, and a nonaqueous electrolyte containing a nonaqueous solvent, in which the nonaqueous solvent contains at least one type of cyclic carbonate selected from a group consisting of a fluorinated cyclic carbonate and an unsaturated cyclic carbonate, and a fluorinated ether, and the content of the cyclic carbonate in the nonaqueous solvent is more than 50 vol%, and the fluorinated ether is represented by the following formula (1):

R¹-O-R² ··· (1)

(in the formula (1), R¹ is a fluorinated alkyl group having the number of carbon atoms of 1 to 3; R² is an alkyl group having the number of carbon atoms of 1 or 2).

## Description

### TECHNICAL FIELD

The present invention relates to a nonaqueous electrolyte energy storage device and a method for manufacturing the same.

### BACKGROUND ART

A nonaqueous electrolyte secondary battery typified by a lithium ion secondary battery is often used for electronic devices such as personal computers and communication terminals, automobiles, and the like, because the battery is high in energy density. The nonaqueous electrolyte secondary battery generally includes a pair of electrodes, which are electrically separated from each other by a separator, and a nonaqueous electrolyte interposed between the electrodes, and is configured to allow charge transport ions such as lithium ions to be transported between the two electrodes to perform charge-discharge. Capacitors such as a lithium ion capacitor and an electric double layer capacitor are also widely used as nonaqueous electrolyte energy storage devices other than the nonaqueous electrolyte secondary battery.

As nonaqueous electrolyte energy storage devices, nonaqueous electrolyte energy storage devices, such as lithium-sulfur batteries (Li-S batteries), in which a sulfur active material is used as a positive electrode are known (see Patent Document 1). The sulfur active material has a large theoretical capacity, and the nonaqueous electrolyte energy storage device in which the sulfur active material is used as a positive electrode is expected as an energy storage device having a high energy density. In addition, since the sulfur active material has low electron conductivity, a composite of the sulfur active material and a conductive agent such as porous carbon may be used as a positive electrode.

### PRIOR ART DOCUMENT

### PATENT DOCUMENT

Patent Document 1: JP-A-2010-95390

### SUMMARY OF THE INVENTION

### PROBLEMS TO BE SOLVED BY THE INVENTION

In a nonaqueous electrolyte energy storage device in which a sulfur active material is used as a positive electrode, when a nonaqueous electrolyte containing a nonaqueous solvent mainly composed of ether is used, a charge-discharge reaction proceeds by a shuttle reaction due to elution of a polysulfide created in the positive electrode into the nonaqueous electrolyte. On the other hand, in a nonaqueous electrolyte energy storage device in which a sulfur active material is used as a positive electrode, when a nonaqueous electrolyte containing a nonaqueous solvent mainly composed of carbonate such as cyclic carbonate is used, a film is created on the surface of the composite of the positive electrode by reaction between the positive electrode and the nonaqueous electrolyte (cyclic carbonate or the like) at the time of initial discharge, and thereafter, charge transport ions are diffused in solid phase through the film, whereby a charge-discharge reaction proceeds. As described above, in the nonaqueous electrolyte energy storage device in which sulfur is used for the positive electrode, it is considered that a reaction mechanism of the positive electrode generated during charge-discharge is different between the case of using the nonaqueous electrolyte containing the nonaqueous solvent mainly composed of ether and the case of using the nonaqueous electrolyte containing the nonaqueous solvent mainly composed of carbonate.

According to findings by the inventors, among nonaqueous electrolyte energy storage devices including a positive electrode using a composite of a sulfur active material and porous carbon, those including a nonaqueous electrolyte using a cyclic carbonate such as fluoroethylene carbonate or vinylene carbonate are promising as energy storage devices having a high energy density per mass. On the other hand, the nonaqueous electrolyte energy storage device using such a cyclic carbonate is desired to be improved in that a discharge capacity per mass of the sulfur active material is not sufficiently large.

An object of the present invention is to provide a nonaqueous electrolyte energy storage device including a positive electrode containing a composite of a sulfur active material and porous carbon and a nonaqueous electrolyte containing a cyclic carbonate, the nonaqueous electrolyte energy storage device having a large discharge capacity per mass of the sulfur active material, and a method for manufacturing such a nonaqueous electrolyte energy storage device.

### MEANS FOR SOLVING THE PROBLEMS

A nonaqueous electrolyte energy storage device according to one aspect of the present invention includes a positive electrode containing a composite of a sulfur active material and porous carbon, and a nonaqueous electrolyte containing a nonaqueous solvent, in which the nonaqueous solvent contains at least one type of cyclic carbonate selected from a group consisting of a fluorinated cyclic carbonate and an unsaturated cyclic carbonate, and a fluorinated ether, and the content of the cyclic carbonate in the nonaqueous solvent is more than 50 vol%, and the fluorinated ether is represented by the following formula (1):

R¹-O- R² ··· (1)

(in the formula (1), R¹ is a fluorinated alkyl group having the number of carbon atoms of 1 to 3; R² is an alkyl group having the number of carbon atoms of 1 or 2).

A method for manufacturing a nonaqueous electrolyte energy storage device according to another aspect of the present invention includes providing a positive electrode containing a composite of a sulfur active material and porous carbon, and providing a nonaqueous electrolyte containing a nonaqueous solvent, in which the nonaqueous solvent contains at least one type of cyclic carbonate selected from a group consisting of a fluorinated cyclic carbonate and an unsaturated cyclic carbonate, and a fluorinated ether, and the content of the cyclic carbonate in the nonaqueous solvent is more than 50 vol%, and the fluorinated ether is represented by the following formula (1):

R¹-O-R² ··· (1)

(in the formula (1), R¹ is a fluorinated alkyl group having the number of carbon atoms of 1 to 3; R² is an alkyl group having the number of carbon atoms of 1 or 2).

### ADVANTAGES OF THE INVENTION

According to one aspect of the present invention, there can be provided a nonaqueous electrolyte energy storage device including a positive electrode containing a composite of a sulfur active material and porous carbon and a nonaqueous electrolyte containing a cyclic carbonate, the nonaqueous electrolyte energy storage device having a large discharge capacity per mass of the sulfur active material, and a method for manufacturing such a nonaqueous electrolyte energy storage device.

### BRIEF DESCRIPTION OF THE DRAWINGS

Fig. 1 is a perspective view illustrating an embodiment of a nonaqueous electrolyte energy storage device.
Fig. 2 is a schematic view illustrating an embodiment of an energy storage apparatus configured by assembling a plurality of nonaqueous electrolyte energy storage devices.

### MODE FOR CARRYING OUT THE INVENTION

First, outlines of a nonaqueous electrolyte energy storage device and a method for manufacturing the nonaqueous electrolyte energy storage device disclosed by the present specification will be described.
[1] A nonaqueous electrolyte energy storage device according to one aspect of the present invention includes a positive electrode containing a composite of a sulfur active material and porous carbon, and a nonaqueous electrolyte containing a nonaqueous solvent, in which the nonaqueous solvent contains at least one type of cyclic carbonate selected from a group consisting of a fluorinated cyclic carbonate and an unsaturated cyclic carbonate, and a fluorinated ether, and the content of the cyclic carbonate in the nonaqueous solvent is more than 50 vol%, and the fluorinated ether is represented by the following formula (1):

   R¹-O- R² ··· (1)

   (in the formula (1), R¹ is a fluorinated alkyl group having the number of carbon atoms of 1 to 3; R² is an alkyl group having the number of carbon atoms of 1 or 2).

The nonaqueous electrolyte energy storage device according to [1] is a nonaqueous electrolyte energy storage device including a positive electrode containing a composite of a sulfur active material and porous carbon and a nonaqueous electrolyte containing a cyclic carbonate, the nonaqueous electrolyte energy storage device having a large discharge capacity per mass of the sulfur active material. The reason therefor is not clear, but the following reason is presumed. In a conventional nonaqueous electrolyte energy storage device including a positive electrode containing a composite of a sulfur active material and porous carbon (hereinafter, also simply referred to as a " composite ") and a nonaqueous electrolyte containing a cyclic carbonate, one of the factors that the discharge capacity is not sufficiently large is considered to be that a contact area between the composite and the nonaqueous electrolyte is small due to a high viscosity of the nonaqueous electrolyte and the like. The fluorinated ether represented by the formula (1) has a relatively low molecular weight and a low viscosity. The fluorinated ether represented by the formula (1) has an alkyl group and a fluorinated alkyl group, and the alkyl group has high affinity with the porous carbon of the composite. By containing such a fluorinated ether in the nonaqueous electrolyte, the viscosity of the nonaqueous electrolyte is reduced, and the wettability of the nonaqueous electrolyte to the composite is improved. Therefore, in the nonaqueous electrolyte energy storage device according to [1], it is presumed that the contact area between the composite and the nonaqueous electrolyte is large, and the discharge capacity per mass of the sulfur active material is large.

The content of each component constituting the nonaqueous solvent is measured by Liquid Chromatography-Mass Spectrometry (LC-MS) and Gas Chromatography-Mass spectrometry (GC-MS). Specifically, the measurement will be performed as follows. The measurements of LC-MS and GC-MS are continuously performed, respectively, under the same conditions.

### 1. Collection of nonaqueous electrolyte

First, the nonaqueous electrolyte energy storage device is disassembled to take out the nonaqueous electrolyte. If the nonaqueous electrolyte cannot be taken out, the nonaqueous electrolyte energy storage device is centrifuged to take out the nonaqueous electrolyte. If the nonaqueous electrolyte cannot be taken out even if centrifugation is performed, an extraction solvent (for example, acetonitrile) is injected into the nonaqueous electrolyte energy storage device to take out the nonaqueous electrolyte diluted with the extraction solvent.

### 2. LC-MS

The components of the collected nonaqueous electrolyte are analyzed by LC-MS. LC-MS analysis is performed in the following order of qualitative analysis and quantitative analysis. As an apparatus for LC-MS analysis, "Acquity H" and "Xevo G2-5QTof" manufactured by Waters are used. Water is used as an eluent.

### (Qualitative analysis)

A measurement sample (nonaqueous electrolyte) is subjected to LC-MS analysis. When the peaks of the obtained liquid chromatogram cannot be separated, GC-MS analysis described later is performed instead of LC-MS analysis. When the peaks can be separated, components contained in the measurement sample are predicted from the MS spectrum of each peak. A known sample of the predicted component (hereinafter, referred to as a "prediction component") is subjected to LC-MS analysis. The retention time and the MS spectrum of the peak corresponding to each of the prediction components of the measurement sample are compared with the retention time and the MS spectrum of the peak of each of the known samples of the prediction components, and when there is a coincidence therebetween, the prediction is presumed to be correct.

### (Quantitative analysis)

The quantitative analysis is performed by a calibration curve method. First, a known sample of a prediction component whose concentration is known is subjected to LC-MS measurement, and an area of a peak is obtained to prepare a calibration curve. The calibration curve is prepared so that the determination coefficient (r²) is 0.999 or more and 1 or less. The content of the prediction component in the measurement sample is determined from the calibration curve and the area of the peak of the prediction component of the measurement sample. The above operation is performed for all peaks detected by LC-MS analysis of the measurement sample, and the content of each prediction component is determined.

### 3. GC-MS

The analysis by GC-MS is performed in the following order of qualitative analysis and quantitative analysis. As an apparatus for GC-MS analysis, "5975C" manufactured by Agilent is used. As a carrier gas, argon is used.

### (Qualitative analysis)

A measurement sample (nonaqueous electrolyte) is subjected to GC-MS analysis. The components contained in the sample are predicted from the MS spectrum of each peak of the obtained gas chromatogram. The known samples of the prediction components are subjected to GC-MS analysis. The retention time and the MS spectrum of the peak corresponding to each of the prediction components of the measurement sample are compared with the retention time and the MS spectrum of the peak of each of the known samples of the prediction components, and when there is a coincidence therebetween, the prediction is presumed to be correct.

### (Quantitative analysis)

The quantitative analysis is performed by a calibration curve method. The quantitative analysis by GC-MS is performed in the same procedure as the quantitative analysis by LC-MS described above, and the content of each prediction component is determined.

### 4. Calculation of content of each component

The content of each component in the nonaqueous solvent is calculated by setting a total content of each prediction component (that is, each component) measured by LC-MS or GC-MS as the content of the nonaqueous solvent. In the calculation of the content (vol%) of each component in the nonaqueous solvent, a value obtained by converting the content by mass of each component measured by LC-MS or GC-MS into a volume at 20°C is used, and a total content of each component in terms of volume is taken as the content of the nonaqueous solvent. In addition, when an extraction solvent is used, the extraction solvent is excluded.

[2] In the nonaqueous electrolyte energy storage device according to [1], the content of the fluorinated ether in the nonaqueous solvent may be 10 vol% or more and less than 50 vol%.

In the nonaqueous electrolyte energy storage device according to [2], the discharge capacity per mass of the sulfur active material is further increased by, for example, optimizing the composition of the nonaqueous solvent.

[3] The nonaqueous electrolyte energy storage device according to [1] or [2] may further include a negative electrode containing metallic lithium.

The nonaqueous electrolyte energy storage device according to [3] has a further advantage such as a high energy density by including a negative electrode containing metallic lithium.

[4] In the nonaqueous electrolyte energy storage device according to any one of [1] to [3], the fluorinated cyclic carbonate may contain fluoroethylene carbonate.

[5] In the nonaqueous electrolyte energy storage device according to any one of [1] to [4], the unsaturated cyclic carbonate may contain vinylene carbonate.

[6] In the nonaqueous electrolyte energy storage device according to any one of [1] to [5], the fluorinated ether may contain at least one type selected from the group consisting of methyl-1,1,2,2-tetrafluoroethyl ether, ethyl-1,1,2,2-tetrafluoroethyl ether, 1,1,2,3,3,3-hexafluoropropyl methyl ether, and 1,1,2,3,3,3-hexafluoropropyl ethyl ether.

[7] In the nonaqueous electrolyte energy storage device according to any one of [1] to [6], a total content of the cyclic carbonate and the fluorinated ether in the nonaqueous solvent may be 80 vol% or more.

[8] In the nonaqueous electrolyte energy storage device according to any one of [1] to [7], the nonaqueous electrolyte may contain an imide salt.

[9] In the nonaqueous electrolyte energy storage device according to any one of [1] to [8], the viscosity of the nonaqueous electrolyte at 25°C may be 0.5 mPa ·s or more and 6.5 mPa ·s or less.

[10] A method for manufacturing a nonaqueous electrolyte energy storage device according to another aspect of the present invention includes providing a positive electrode containing a composite of a sulfur active material and porous carbon, and providing a nonaqueous electrolyte containing a nonaqueous solvent, in which the nonaqueous solvent contains at least one type of cyclic carbonate selected from a group consisting of a fluorinated cyclic carbonate and an unsaturated cyclic carbonate, and a fluorinated ether, and the content of the cyclic carbonate in the nonaqueous solvent is more than 50 vol%, and the fluorinated ether is represented by the following formula (1):

R¹-O-R² ··· (1)

(in the formula (1), R¹ is a fluorinated alkyl group having the number of carbon atoms of 1 to 3; R² is an alkyl group having the number of carbon atoms of 1 or 2).

According to the method for producing the nonaqueous electrolyte energy storage device described in [10] above, it is possible to manufacture a nonaqueous electrolyte energy storage device including a positive electrode containing a composite of a sulfur active material and porous carbon and a nonaqueous electrolyte containing a cyclic carbonate, the nonaqueous electrolyte energy storage device having a large discharge capacity per mass of the sulfur active material.

[11] In the method for manufacturing the nonaqueous electrolyte energy storage device according to [10], the content of the fluorinated ether in the nonaqueous solvent may be 10 vol% or more and less than 50 vol%.

[12] The method for manufacturing the nonaqueous electrolyte energy storage device according to [10] or [11] may further include providing a negative electrode containing metallic lithium.

[13] In the method for manufacturing the nonaqueous electrolyte energy storage device according to any one of [10] to [12], the fluorinated cyclic carbonate may contain fluoroethylene carbonate.

[14] In the method for manufacturing the nonaqueous electrolyte energy storage device according to any one of [10] to [13], the unsaturated cyclic carbonate may contain vinylene carbonate.

[15] In the method for manufacturing the nonaqueous electrolyte energy storage device according to any one of [10] to [14], the fluorinated ether may contain at least one selected from the group consisting of methyl-1,1,2,2-tetrafluoroethyl ether, ethyl-1,1,2,2-tetrafluoroethyl ether, 1,1,2,3,3,3-hexafluoropropyl methyl ether, and 1,1,2,3,3,3-hexafluoropropyl ethyl ether.

[16] In the method for manufacturing the nonaqueous electrolyte energy storage device according to any one of [10] to [15], a total content of the cyclic carbonate and the fluorinated ether in the nonaqueous solvent may be 80 vol% or more.

[17] In the method for manufacturing the nonaqueous electrolyte energy storage device according to any one of [10] to [16], the nonaqueous electrolyte may contain an imide salt.

[18] In the method for manufacturing the nonaqueous electrolyte energy storage device according to any one of [10] to [17], the viscosity of the nonaqueous electrolyte at 25°C may be 0.5 mPa ·s or more and 6.5 mPa ·s or less.

A nonaqueous electrolyte energy storage device, an energy storage apparatus, and a method for manufacturing a nonaqueous electrolyte energy storage device according to an embodiment of the present invention, and other embodiments will be described in detail. It is to be noted that the name of each structural member (each component) used in each embodiment is in some cases different from the name of each structural member (each component) used in BACKGROUND ART.

### <Nonaqueous electrolyte energy storage device>

A nonaqueous electrolyte energy storage device according to an embodiment of the present invention (hereinafter, also referred to simply as an "energy storage device") includes an electrode assembly including a positive electrode, a negative electrode, and a separator, a nonaqueous electrolyte, and a case that houses the electrode assembly and the nonaqueous electrolyte. The electrode assembly is typically a stacked type in which a plurality of positive electrodes and a plurality of negative electrodes are stacked with the separator interposed therebetween, or a wound type in which the positive electrode and the negative electrode are wound in a state of being stacked with the separator interposed therebetween. The nonaqueous electrolyte is present in a state of being penetrated to the positive electrode, the negative electrode, and the separator. A nonaqueous electrolyte secondary battery (hereinafter also referred to simply as a "secondary battery") will be described as an example of the nonaqueous electrolyte energy storage device.

### (Positive electrode)

The positive electrode includes a positive substrate and a positive active material layer disposed on the positive substrate directly or with an intermediate layer interposed therebetween.

The positive substrate has conductivity. Whether or not the positive substrate has "conductivity" is determined by using a volume resistivity of 10⁻² Ω ·cm as a threshold, the volume resistivity being measured in accordance with JIS-H-0505 (1975). As a material for the positive substrate, a metal such as aluminum, titanium, tantalum, and stainless steel, or an alloy thereof is used. Among them, aluminum or an aluminum alloy is preferable from the viewpoint of electric potential resistance, high conductivity, and costs. Examples of the positive substrate include a foil, a deposited film, a mesh, and a porous material, and the foil is preferable from the viewpoint of costs. Therefore, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 µm or more and 50 µm or less, more preferably 5 µm or more and 40 µm or less, still more preferably 8 µm or more and 30 µm or less, and particularly preferably 10 µm or more and 25 µm or less. By setting the average thickness of the positive substrate within the above range, it is possible to increase an energy density per mass of the positive electrode or per volume of the positive electrode while increasing a strength of the positive substrate. The "average thickness" means an average value of thicknesses measured at any five points.

The intermediate layer is a layer disposed between the positive substrate and the positive active material layer. The intermediate layer contains a conductive agent such as carbon particles, thereby reducing contact resistance between the positive substrate and the positive active material layer. The composition of the intermediate layer is not particularly limited, and the intermediate layer contains, for example, a binder and a conductive agent.

The positive active material layer contains a composite of a sulfur active material and porous carbon. The positive active material layer contains, as necessary, optional components such as a conductive agent, a binder, a dispersant, a thickener, and a filler. The positive active material layer is usually created from a positive composite containing a composite and other optional components.

In the composite, usually, a sulfur active material is supported in pores of porous carbon. The composite keeps such a form and thereby secures sufficient electronic conductivity. The composite may be substantially composed only of the sulfur active material and the porous carbon, or may be composed only of the sulfur active material and the porous carbon. That the composite is substantially composed only of the sulfur active material and the porous carbon means that, for example, a total content of the sulfur active material (a total of the simple sulfur and the sulfur compound) and the porous carbon in the composite is 90 mass% or more, and may be 95 mass% or more, 98 mass% or more, or 99 mass% or more.

The sulfur active material contained in the composite is a component that functions as a positive active material. The sulfur active material may be simple sulfur, a sulfur compound, or a mixture thereof. That is, the composite may contain elemental sulfur together with the porous carbon. Examples of the sulfur compound include metal sulfides such as lithium sulfide, and organic sulfur compounds such as organic disulfide compounds and carbon sulfide compounds. The sulfur active material has advantages such as a high theoretical capacity and low costs.

The content of the sulfur active material in the composite is preferably 50 mass% or more and 90 mass% or less, more preferably 60 mass% or more and 80 mass% or less. By setting the content of sulfur active material in the composite within the above range, the discharge capacity per mass of the sulfur active material can be further increased.

The porous carbon has conductivity. The porous carbon is generally a porous inorganic material containing elemental carbon as a main constituent element. The main constituent element means an element having the highest content on a mass basis. The lower limit of the content of the elemental carbon in the porous carbon is preferably 70 mass%, more preferably 80 mass%, 90 mass%, 95 mass%, or 97 mass%. The upper limit of the content of the elemental carbon in the porous carbon may be 100 mass% or 99.9 mass%. The content of the elemental carbon in the porous carbon may be within a range obtained by combining any of the above lower limits and the above upper limit. The porous carbon may include elements, such as elemental oxygen and elemental nitrogen, other than the elemental carbon.

The composite can be manufactured by a conventionally known method. For example, the composite can be obtained, for example, by heating a mixture of the sulfur active material and the porous carbon to the melting point of the sulfur active material or higher, and thereafter cooling the mixture.

The content of the composite in the positive active material layer is preferably 60 mass% or more and 97 mass% or less, more preferably 80 mass% or more and 96 mass% or less, still more preferably 90 mass% or more and 95 mass% or less. By setting the content of the composite within the above range, the discharge capacity per mass of the sulfur active material can be further increased.

The positive active material layer may contain a positive active material other than the sulfur active material. However, the content of sulfur active material in the entire positive active material is preferably 50 mass% or more, more preferably 70 mass% or more, still more preferably 90 mass% or more, even more preferably 99 mass% or more, and particularly preferably 100 mass%.

The conductive agent is not particularly limited as long as the conductive agent is a material having conductivity. The conductive agent does not contain porous carbon constituting the composite. Examples of such a conductive agent include carbonaceous materials, metals, and conductive ceramics. Examples of the carbonaceous material include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one type of the above materials may be used singly, or two or more types thereof may be used in mixture. Alternatively, these materials may be used in the form of a composite. For example, a composite material of carbon black and CNTs may be used. Among them, carbon black is preferable, and in particular, acetylene black is preferable, from the viewpoint of electron conductivity and coatability. It is also preferable to use carbon black (preferably acetylene black) and CNTs in combination.

The content of the conductive agent (excluding porous carbon in the composite) in the positive active material layer is preferably 0.5 mass% or more and 15 mass% or less, more preferably 1 mass% or more and 10 mass% or less. The upper limit of the content of the conductive agent in the positive active material layer may be 5 mass% or 3 mass%. When the content of the conductive agent falls within the above range, the energy density per mass of the positive electrode or the like can be increased.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1 mass% or more and 10 mass% or less, more preferably 2 mass% or more and 9 mass% or less. The upper limit of the content of the binder in the positive active material layer may be 6 mass% or 4 mass%. By setting the binder content to the above range, the composite and the like can be stably held.

Examples of the dispersant include polysaccharide polymers such as carboxymethyl cellulose (CMC) and methyl cellulose. When the dispersant contains a functional group that reacts with lithium or the like, the functional group may be deactivated in advance by methylation or the like. The content of the dispersant in the positive active material layer is preferably 0.05 mass% or more and 5 mass% or less, more preferably 0.1 mass% or more and 2 mass% or less. The polysaccharide polymer may function as a thickener or a binder.

Examples of the thickener include polyacrylic acid (PAA). The content of the thickener in the positive active material layer is preferably 0.05 mass% or more and 5 mass% or less, more preferably 0.1 mass% or more and 4 mass% or less. The polyacrylic acid may function as a binder.

The filler is not particularly limited. Examples of the filler include: polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and mineral-derived materials such as talc, montmorillonite, boehmite, zeolite, apatite, kaolin, mullite, spinel, olivine, sericite, bentonite, and mica, or artificial products thereof. When the positive active material layer contains a filler, the content of the filler in the positive active material layer is preferably, for example, 0.1 mass% or more and 10 mass% or less. In an embodiment of the present invention, a filler may not be contained in the positive active material layer.

The positive active material layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Nb, or W, as components other than the composite and other positive active materials, a conductive agent, a binder, a dispersant, a thickener, and a filler.

The mass per unit area of the positive active material layer is not particularly limited, but is preferably 1 mg/cm² or more and 30 mg/cm² or less, more preferably 5 mg/cm² or more and 25 mg/cm² or less, and still more preferably 10 mg/cm² or more and 20 mg/cm² or less. When the mass per unit area of one positive active material layer is within the above range, the discharge capacity per mass of the sulfur active material can be further increased.

The porosity of the positive active material layer is not particularly limited, but is preferably 15% or more and 50% or less, more preferably 20% or more and 40% or less, and still more preferably 25% or more and 35% or less. When the porosity of the positive active material layer is within the above range, the discharge capacity per mass of the sulfur active material can be further increased.

The "porosity (%)" of the positive active material layer is determined by a calculation formula of (1-V₂/V₁) × 100, where an apparent volume (volume including voids) of the positive active material layer is defined as V₁, and a sum of actual volumes of materials forming the positive active material layer is defined as V₂. The sum V₂ of actual volumes of the materials forming the positive active material layer can be calculated from the content of each material in the positive active material layer and the true density of each material.

### (Negative electrode)

The negative electrode includes a negative substrate and a negative active material layer disposed on the negative substrate or with an intermediate layer interposed therebetween. The configuration of the intermediate layer is not particularly limited, and for example can be selected from the configurations exemplified for the positive electrode.

The negative substrate has conductivity. As a material for the negative substrate, a metal such as copper, nickel, stainless steel, or nickel-plated steel, or an alloy thereof, a carbonaceous material, or the like is used. Among them, nickel or a nickel alloy is preferable. Examples of the negative substrate include a foil, a deposited film, a mesh, and a porous material, and a foil is preferable from the viewpoint of costs. Therefore, the negative substrate is preferably a nickel foil or a nickel alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative substrate falls within the above range, it is possible to increase the energy density per volume of the nonaqueous electrolyte energy storage device while increasing the strength of the negative substrate.

The negative active material layer includes a negative active material. The negative active material layer contains, as necessary, optional components such as a conductive agent, a binder, a thickener, and a filler. The optional components such as a conductive agent, a binder, a thickener, and a filler can be selected from the materials exemplified for the positive electrode. The negative active material layer may not contain optional components such as a conductive agent, a binder, a thickener, and a filler.

The negative active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Ta, Hf, Nb, and W, as a component other than the negative active material, the conductive agent, the binder, the thickener, and the filler.

The negative active material can be appropriately selected from known negative active materials. As a negative active material for a lithium ion secondary battery, a material capable of occluding and releasing lithium ions is typically used. Examples of the negative active material include metallic lithium; metals or metalloids such as Si and Sn; metal oxides or metalloid oxides such as Si oxide, Ti oxide, and Sn oxide; titanium-containing oxides such as Li₄Ti₅O₁₂, LiTiO₂, and TiNb₂O₇; polyphosphoric acid compounds; silicon carbide; and carbon materials such as graphite and non-graphitic carbon (easily graphitizable carbon or hardly graphitizable carbon). In the case of a negative active material containing no charge transport ions such as lithium ions, a material doped with lithium ions or the like can be used.

The metallic lithium is preferable as a negative active material. The metallic lithium may be pure metallic lithium composed substantially of lithium element, or a lithium alloy containing other metal elements. Examples of the lithium alloy include a lithium silver alloy, a lithium zinc alloy, a lithium calcium alloy, a lithium aluminum alloy, a lithium magnesium alloy, and a lithium indium alloy. The lithium alloy may contain a plurality of metal elements other than lithium element.

The negative active material layer may contain a negative active material other than metallic lithium. However, the negative active material layer is preferably a layer substantially composed only of metallic lithium (pure metal lithium or lithium alloy). The lower limit of the content of the lithium element in the negative active material layer is preferably 80 %mass, more preferably 90 %mass, and still more preferably 99 %mass. The upper limit of the content of the lithium element in the negative active material layer may be 100 %mass. The content of the lithium element in the negative active material layer can be within a range obtained by combining any of the above lower limits and the above upper limit.

The negative active material layer may be a non-porous layer (solid layer) or a porous layer, but is preferably a non-porous layer. The negative active material layer may be a metallic lithium layer. The negative active material layer may be a layer made of metallic lithium foil (pure metallic lithium foil or lithium alloy foil). The average thickness of the negative active material layer in a charged state is preferably 5 µm or more and 2,000 µm or less, more preferably 30 µm or more and 1,200 µm or less, and still more preferably 100 µm or more and 800 µm or less.

### (Separator)

The separator can be appropriately selected from known separators. As the separator, for example, a separator composed of only a substrate layer, a separator in which a heat resistant layer containing heat resistant particles and a binder is created on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of the liquid retaining property of the nonaqueous electrolyte. As a material for the substrate layer of the separator, for example, polyolefin such as polyethylene or polypropylene is preferable from the viewpoint of shutdown function, and polyimide, aramid, or the like is preferable from the viewpoint of resistance to oxidative decomposition. As a substrate layer of the separator, a composite material of these resins may also be used.

The heat resistant particles contained in the heat resistant layer have preferably a mass loss of 5% or less when heated from room temperature to 500°C in an air atmosphere of 1 atm, and more preferably a mass loss of 5% or less when heated from room temperature to 800°C. Examples of materials that have a mass loss equal to or less than a predetermined value include an inorganic compound. That is, the heat resistant layer may be an inorganic particle layer containing inorganic particles and a binder. Examples of the inorganic compound include oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, or artificial products thereof. As the inorganic compound, a simple substance or composite of these substances may be used singly, or two or more types thereof may be used in mixture. Among these inorganic compounds, silicon oxide, aluminum oxide, or aluminosilicate is preferable from the viewpoint of safety of the nonaqueous electrolyte energy storage device.

The separator has a porosity of preferably 80 vol% or less from the viewpoint of strength, and preferably 20 vol% or more from the viewpoint of discharge performance. Here, "porosity" is a volume-based value, and means a value measured with a mercury porosimeter.

As the separator, a polymer gel composed of a polymer and a nonaqueous electrolyte may also be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has an effect of suppressing liquid leakage. As the separator, the polymer gel may be used in combination with the porous resin film, the nonwoven fabric, or the like described above.

### (Nonaqueous electrolyte)

The nonaqueous electrolyte includes a nonaqueous solvent. As the nonaqueous electrolyte, a nonaqueous electrolyte solution containing a nonaqueous solvent and an electrolyte salt dissolved in the nonaqueous solvent is usually suitably used. In an embodiment of the present invention, the nonaqueous electrolyte energy storage device may be a nonaqueous electrolyte solution energy storage device.

The nonaqueous solvent contains at least one type of cyclic carbonate (hereinafter, also referred to as "cyclic carbonate (A)") selected from a group consisting of a fluorinated cyclic carbonate and an unsaturated cyclic carbonate. When the nonaqueous solvent contains such a cyclic carbonate (A), an energy density per mass can be increased. The cyclic carbonate (A) may contain a fluorinated unsaturated cyclic carbonate which is a fluorinated cyclic carbonate and is an unsaturated cyclic carbonate.

The fluorinated cyclic carbonate refers to a compound in which some or all of hydrogen atoms of the cyclic carbonate are substituted with fluorine atoms. The cyclic carbonate refers to a carbonate having a ring structure containing a carbonate group (-O-C(=O)-O-). The fluorinated cyclic carbonate is preferably fluorinated saturated cyclic carbonate. The fluorinated saturated cyclic carbonate refers to a fluorinated cyclic carbonate having no carbon-carbon double bond and no carbon-carbon triple bond in a molecule.

Examples of the fluorinated cyclic carbonate include fluorinated ethylene carbonates such as fluoroethylene carbonate (FEC) and difluoroethylene carbonate (DFEC), fluorinated propylene carbonate, fluorinated butylene carbonate, and fluorinated vinylene carbonate. Among them, the fluorinated ethylene carbonates are preferable, and FEC is more preferable. One or two or more types of the fluorinated cyclic carbonates can be used.

The lower limit of the content of the fluorinated cyclic carbonate in the nonaqueous solvent may be 0 vol%, preferably 30 vol%, more preferably 40 vol%, still more preferably 50 vol%, and may be 60 vol%, 70 vol%, or 80 vol%. The upper limit of the content of the fluorinated cyclic carbonate in the nonaqueous solvent may be 95 vol%, 90 vol%, 80 vol%, 70 vol%, 60 vol%, or 50 vol%. The content of the fluorinated cyclic carbonate in the nonaqueous solvent can be within a range obtained by combining any of the above lower limits and any of the above upper limits (however, the upper limit is larger than the lower limit). When the nonaqueous solvent contains an unsaturated cyclic carbonate, the nonaqueous solvent may not contain a fluorinated cyclic carbonate.

The unsaturated cyclic carbonate refers to a cyclic carbonate having a carbon-carbon double bond or a carbon-carbon triple bond in a molecule. The unsaturated cyclic carbonate preferably has a carbon-carbon double bond in the molecule. The unsaturated cyclic carbonate may have a carbon-carbon double bond or a carbon-carbon triple bond in the ring structure, or may have it in a portion other than the ring structure, but preferably has it in the ring structure. The unsaturated cyclic carbonate may or may not be fluorinated, but is preferably not fluorinated.

Examples of the unsaturated cyclic carbonate include vinylene carbonate (VC), methylvinylene carbonate, ethylvinylene carbonate, propylvinylene carbonate, butylvinylene carbonate, dimethylvinylene carbonate, diethylvinylene carbonate, dipropylvinylene carbonate, and vinylethylene carbonate, and VC is preferable. One or two or more types of the unsaturated cyclic carbonates can be used.

The lower limit of the content of the unsaturated cyclic carbonate in the nonaqueous solvent may be 0 vol%, 5 vol%, 10 vol%, 20 vol%, or 30 vol%. The upper limit of the content of the unsaturated cyclic carbonate in the nonaqueous solvent may be 95 vol%, or may be 90 vol%, 80 vol%, 60 vol%, 40 vol%, 20 vol%, or 10 vol%. The content of the unsaturated cyclic carbonate in the nonaqueous solvent can be within a range obtained by combining any of the above lower limits and any of the above upper limits (however, the upper limit is larger than the lower limit). When the nonaqueous solvent contains a fluorinated cyclic carbonate, the nonaqueous solvent may not contain an unsaturated cyclic carbonate.

The content of the cyclic carbonate (A) in the nonaqueous solvent is more than 50 vol%. The lower limit of the content of the cyclic carbonate (A) in the nonaqueous solvent may be 55 vol%, 60 vol%, 65 vol%, 70 vol%, 75 vol%, 80 vol%, 85 vol%, or 90 vol%. The upper limit of the content of the cyclic carbonate (A) in the nonaqueous solvent may be 95 vol%, or may be 90 vol%, 85 vol%, 80 vol%, 75 vol%, 70 vol%, 65 vol%, 60 vol%, or 55 vol%. The content of the cyclic carbonate (A) in the nonaqueous solvent can be within a range obtained by combining any of the above lower limits and any of the above upper limits (however, the upper limit is larger than the lower limit). In the nonaqueous electrolyte energy storage device according to one embodiment of the present invention, since the content of the cyclic carbonate (A) in the nonaqueous solvent is more than 50 vol%, it is considered that a charge-discharge reaction occurs due to solid-phase diffusion of charge transport ions through the coating film in the positive electrode. That is, when the content of the cyclic carbonate (A) in the nonaqueous solvent is more than 50 vol%, a good film is sufficiently created on the surface of the composite, and the energy density per mass of the nonaqueous electrolyte energy storage device can be increased.

The nonaqueous solvent contains a fluorinated ether (hereinafter, also referred to as "fluorinated ether (B)") represented by the following formula (1). When the nonaqueous solvent contains the fluorinated ether (B), the discharge capacity per mass of the sulfur active material can be increased.

R¹-O-R² ··· (1)

(in the formula (1), R¹ is a fluorinated alkyl group having the number of carbon atoms of 1 to 3; R² is an alkyl group having the number of carbon atoms of 1 or 2).

Examples of R¹ include a group in which some or all of hydrogen atoms of a methyl group, an ethyl group, a propyl group, or a 1-methylethyl group are substituted with fluorine atoms. The number of carbon atoms of R¹ is preferably 2 or 3. The number of fluorine atoms in R¹ is preferably 2 or more and 6 or less, and more preferably 4 or more and 6 or less.

Examples of the group represented by R¹ include a 1,1,2,2-tetrafluoroethyl group and a 1,1,2,3,3,3-hexafluoropropyl group.

The group represented by R² is a methyl group or an ethyl group, and an ethyl group is preferable.

Examples of the fluorinated ether (B) include methyl-1,1,2,2-tetrafluoroethyl ether, ethyl-1,1,2,2-tetrafluoroethyl ether, 1,1,2,3,3,3-hexafluoropropyl methyl ether, and 1,1,2,3,3,3-hexafluoropropyl ethyl ether. One, or two or more types of fluorinated ether (B) can be used.

The lower limit of the content of the fluorinated ether (B) in the nonaqueous solvent is preferably 5 vol%, more preferably 10 vol%, and may be 15 vol%, 20 vol%, or 25 vol%. The content of the fluorinated ether (B) in the nonaqueous solvent is less than 50 vol%. The upper limit of the content of the fluorinated ether (B) in the nonaqueous solvent may be 45 vol%, 40 vol%, 35 vol%, 30 vol%, 25 vol%, 20 vol%, 15 vol%, or 10 vol%. The content of the fluorinated ether (B) in the nonaqueous solvent can be within a range obtained by combining any of the above lower limits and any of the above upper limits (however, the upper limit is larger than the lower limit). When the content of the fluorinated ether in the nonaqueous solvent is within the above range, the discharge capacity per mass of the sulfur active material of the nonaqueous electrolyte energy storage device can be further increased.

The lower limit of a total content of the cyclic carbonate (A) and the fluorinated ether (B) in the nonaqueous solvent is preferably 70 vol%, preferably 75 vol%, preferably 80 vol%, more preferably 85 vol%, still more preferably 90 vol%, and may be 95 vol%, 96 vol%, 97 vol%, or 98 vol%. The upper limit of a total content of the cyclic carbonate (A) and the fluorinated ether (B) in the nonaqueous solvent may be 100 vol%, and the nonaqueous solvent may be substantially composed only of the cyclic carbonate (A) and the fluorinated ether (B). When the nonaqueous solvent is substantially composed only of the cyclic carbonate (A) and the fluorinated ether (B), an effect of increasing the discharge capacity per mass of the sulfur active material can be particularly favorably exhibited. A total content of the cyclic carbonate (A) and the fluorinated ether (B) in the nonaqueous solvent can be within a range obtained by combining the above lower limit and any of the above upper limits.

The nonaqueous solvent may further contain a solvent other than the cyclic carbonate (A) and the fluorinated ether (B). Examples of the other solvent include cyclic carbonates other than the cyclic carbonate (A), chain carbonates, ethers other than the fluorinated ether (B), esters, amides, and nitriles. Examples of other cyclic carbonates include saturated cyclic carbonates that are not fluorinated, such as ethylene carbonate, propylene carbonate, butylene carbonate, and chloroethylene carbonate. Examples of the chain carbonates include diethyl carbonate, dimethyl carbonate, ethyl methyl carbonate, diphenyl carbonate, 2,2,2-trifluoroethyl methyl carbonate, and bis(2,2,2-trifluoroethyl) carbonate.

The electrolyte salt can be appropriately selected from known electrolyte salt. Examples of the electrolyte salt include lithium salt, sodium salt, potassium salt, magnesium salt, and onium salt. Among these salts, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis (oxalate) borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₃)₂, LiN(SO₂CF₃)(SO₂C₄F₉), LiC(SO₂CF₃)₃, and LiC(SO₂C₂F₃)₃. Among them, inorganic lithium salts are preferable, LiPF₆ and LiN (SO₂F)₂ are more preferable, and LiN (SO₂F)₂ is still more preferable. In addition, imide salts such as LiN(SO₂F)₂, LiN(SO₂CF₃)₂, LiN(SO₂C₂F₅)₂, and LiN(SO₂CF₃)(SO₂C₄F₉) are also preferable, and LiN(SO₂CF₃)₂ is more preferable.

The content of the electrolyte salt in the nonaqueous electrolyte solution or the nonaqueous electrolyte is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. When the content of the electrolyte salt is within the above range, the ionic conductivity of the nonaqueous electrolyte solution or the nonaqueous electrolyte can be increased.

The nonaqueous electrolyte solution may contain an additive in addition to the nonaqueous solvent and the electrolyte salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, cyclohexanedicarboxylic anhydride; and ethylene sulfite, propylene sulfite, dimethyl sulfite, methyl methanesulfonate, busulfan, methyl toluene sulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One type of these additives may be used singly, or two or more types thereof may be used in mixture.

The content of the additive contained in the nonaqueous electrolyte solution is preferably 0.01 mass% or more and 10 mass% or less, more preferably 0.1 mass% or more and 7 mass% or less, still more preferably 0.2 mass% or more and 5 mass% or less, particularly preferably 0.3 mass% or more and 3 mass% or less, with respect to a total mass of the nonaqueous electrolyte solution. When the content of the additive falls within the above range, it is possible to improve capacity retention performance or cycle performance after high-temperature storage, and to further improve safety.

The upper limit of the viscosity of the nonaqueous electrolyte solution or the nonaqueous electrolyte at 25°C is preferably 6.5 mPa ·s, more preferably 6.0 mPa ·s, and may be 5.5 mPa ·s, 5.0 mPa ·s, 4.5 mPa ·s, or 4.0 mPa ·s. The lower limit of the viscosity may be 0.5 mPa ·s, 1.0 mPa ·s, 1.2 mPa ·s, 1.4 mPa ·s, 1.6 mPa ·s, 1.8 mPa ·s, 2.0 mPa ·s, 2.4 mPa ·s, or 2.8 mPa ·s. The viscosity can be within a range obtained by combining any of the lower limits described above and any of the upper limits described above. The viscosity is measured by using LOVIS2000ME manufactured by Anton Paar GmbH as a measuring device and setting an environmental temperature of a room in which the measuring device is placed to 25°C.

For the nonaqueous electrolyte, a nonaqueous electrolyte solution and a solid electrolyte may be used in combination. The solid electrolyte can be selected from, for example, arbitrary materials with lithium ion conductivity, which are solid at normal temperature (for example, from 15°C to 25°C). Examples of the solid electrolyte include a sulfide solid electrolyte, an oxide solid electrolyte, a nitride solid electrolyte, a halide solid electrolyte, and a polymer solid electrolyte.

The shape of the nonaqueous electrolyte energy storage device according to the present embodiment is not particularly limited, and examples thereof include a cylindrical battery, a prismatic battery, a flat battery, a coin battery, and a button battery.

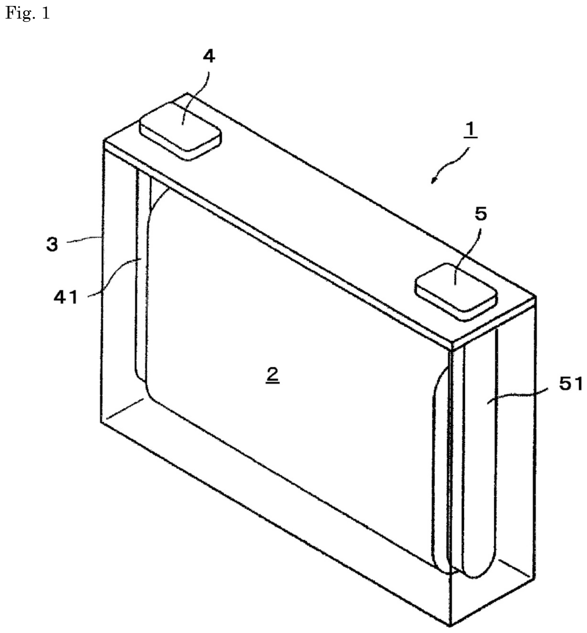

Fig. 1 illustrates a nonaqueous electrolyte energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted, as an energy storage unit (battery module) configured by assembling a plurality of nonaqueous electrolyte energy storage devices, on a power source for an automobile such as an electric vehicle (EV), a hybrid electric vehicle (HEV), and a plug-in hybrid electric vehicle (PHEV), a power source for an electronic device such as a personal computer and a communication terminal, a power source for power storage, or the like. In this case, the technique of the present invention may be applied to at least one nonaqueous electrolyte energy storage device included in the energy storage unit.

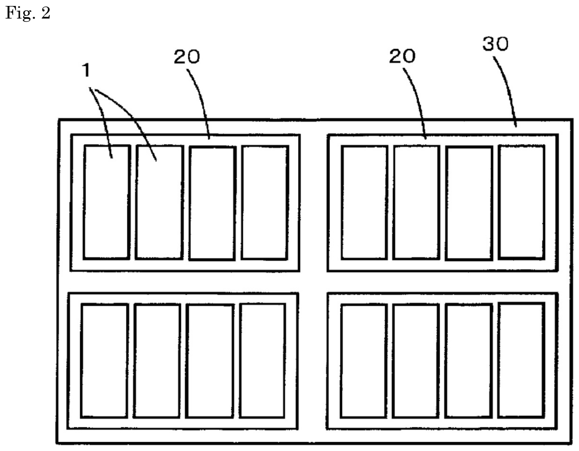

Fig. 2 illustrates an example of an energy storage apparatus 30 configured by assembling an energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1, a busbar (not illustrated) for electrically connecting two or more energy storage units 20, and the like. The energy storage unit 20 or the energy storage apparatus 30 may include a state monitor (not illustrated) that monitors the state of one or more nonaqueous electrolyte energy storage devices.

### <Method for manufacturing nonaqueous electrolyte energy storage device>

A method for manufacturing the nonaqueous electrolyte energy storage device of the present embodiment can be appropriately selected from known methods. The manufacturing method includes, for example, providing a positive electrode, providing a negative electrode, providing a separator, providing a nonaqueous electrolyte, fabricating an electrode assembly using the positive electrode, the negative electrode, and the separator, and housing the electrode assembly and the nonaqueous electrolyte in a case.

The positive electrode to be provided contains a composite of a sulfur active material and porous carbon. The specific form and suitable form of the positive electrode to be provided are the same as the specific form and suitable form of the positive electrode provided in the nonaqueous electrolyte energy storage device according to one embodiment of the present invention described above. Providing the positive electrode may be fabricating the positive electrode. The positive electrode can be fabricated by, for example, applying a paste-like positive composite (positive composite paste) to a positive substrate directly or via an intermediate layer and drying the composite to create a positive active material layer. The positive composite paste contains a composite of a sulfur active material and porous carbon, other components constituting the positive active material layer, and a dispersion medium.

Providing the negative electrode may be fabricating the negative electrode. The specific form and suitable form of the negative electrode to be provided are the same as the specific form and suitable form of the negative electrode provided in the nonaqueous electrolyte energy storage device according to an embodiment of the present invention. The negative electrode containing metallic lithium can be fabricated by stacking negative active material layers containing metal lithium directly on a negative substrate or over the substrate with an intermediate layer interposed therebetween, and pressing or the like. The negative active material layer containing metal lithium may be a pure-metallic lithium foil or a lithium alloy foil. The negative electrode can be fabricated in the same manner as the fabrication of the positive electrode.

The nonaqueous electrolyte to be provided contains a nonaqueous solvent, the nonaqueous solvent contains a cyclic carbonate (A) and a fluorinated ether (B), and the content of the cyclic carbonate (A) in the nonaqueous solvent is more than 50 vol%. The specific form and suitable form of the nonaqueous electrolyte to be provided are the same as the specific form and suitable form of the nonaqueous electrolyte provided in the nonaqueous electrolyte energy storage device according to an embodiment of the present invention described above. Providing the nonaqueous electrolyte may be preparing a nonaqueous electrolyte. The nonaqueous electrolyte can be prepared by, for example, mixing an electrolyte salt, a nonaqueous solvent, and the like.

The electrode assembly can be fabricated by stacking or winding a positive electrode and a negative electrode with a separator interposed therebetween.

Housing the nonaqueous electrolyte in a case can be appropriately selected from known methods. For example, in the case of using a nonaqueous electrolyte solution for the nonaqueous electrolyte, the nonaqueous electrolyte solution may be injected through an inlet created in the case, and then the inlet may be sealed.

The manufacturing method may include performing initial charge-discharge for an undischarged nonaqueous electrolyte energy storage device. The initial charge-discharge is usually started from discharge. The first discharge or the like may be referred to as a formation treatment. The number of times of charge and discharge in the initial charge-discharge is not particularly limited. Through the initial charge-discharge or the formation treatment, a good film due to the reaction between the positive electrode and a part of the nonaqueous electrolyte is created on the composite surface of the positive electrode.

### <Other embodiments>

Note that the nonaqueous electrolyte energy storage device according to the present invention is not limited to the embodiments described above, and various changes may be made without departing from the gist of the present invention. For example, to the configuration of an embodiment, the configuration of another embodiment can be added, or a part of the configuration of an embodiment can be replaced with the configuration of another embodiment or a well-known technique. Furthermore, a part of the configuration of an embodiment can be deleted. In addition, a well-known technique can be added to the configuration of an embodiment.

In the above embodiment, although the case where the nonaqueous electrolyte energy storage device is used as a nonaqueous electrolyte secondary battery (for example, lithium-sulfur battery) that can be charged and discharged has been described, the type, shape, size, capacity, and the like of the nonaqueous electrolyte energy storage device are arbitrary. The present invention can also be applied to various secondary batteries, capacitors, and the like.

While the electrode assembly in which the positive electrode and the negative electrode are stacked with the separator interposed therebetween has been described in the above embodiment, the electrode assembly may not include a separator. For example, the positive electrode and the negative electrode may be brought into direct contact with each other, with a non-conductive layer created on the active material layer of the positive electrode or negative electrode.

### EXAMPLES

Hereinafter, the present invention will be described more specifically by way of examples, but the present invention is not limited to the following examples.

### [Example 1]

### (Fabrication of positive electrode)

Simple sulfur, which is a sulfur active material, and porous carbon ("CNovel (CNovel)" manufactured by Toyo Tanso Co., Ltd.) were mixed at a mass ratio of 70 : 30. The mixture was placed in a sealed electric furnace. After argon flow for 1 hour, the temperature was increased to 150°C at a rate of temperature increase of 5°C/min, the mixture was held at 150°C for 5 hours and then cooled to 80°C, which was a temperature at which a simple sulfur was solidified, then the temperature was increased again to 300°C at a rate of temperature increase of 5°C/min, and the mixture was held at 300°C for 2 hours to perform heat treatment, whereby a composite (sulfur-porous carbon composite: SPC) was produced.

A positive composite paste containing the composite obtained above, acetylene black and CNT as a conductive agent, CMC as a dispersant, PAA as a thickener, and SBR as a binder, using water as a dispersion medium was applied to an aluminum positive substrate (an average thickness of 15 µm), and drying was performed. The application amount of the positive composite paste was adjusted so that the mass per unit area of the positive active material layer after drying the dispersion medium was 15 mg/cm². Through the above steps, a positive electrode with the positive active material layer stacked on the positive substrate was obtained. The porosity of the positive active material layer in the obtained positive electrode was 30%.

### (Provision of negative electrode)

A pure metallic lithium foil (an average thickness of 600 µm) was provided as a negative electrode.

### (Preparation of nonaqueous electrolyte)

A nonaqueous solvent obtained by mixing fluoroethylene carbonate (FEC) as a fluorinated cyclic carbonate, vinylene carbonate (VC) as an unsaturated cyclic carbonate, and ethyl-1,1,2,2-tetrafluoroethyl ether (ETFEE) as a fluorinated ether (B) at a volume ratio of 43 : 43 : 13 was added with LiN (SO₂CF₃)₂ as an electrolyte salt at a content of 1.0 mol/dm³ to prepare a nonaqueous electrolyte. The viscosity of the obtained nonaqueous electrolyte at 25°C measured 4.1 mPa ·s through the above method.

### (Assembly of nonaqueous electrolyte energy storage device)

As a separator, a separator in which inorganic particle layers were stacked on both surfaces of a polyethylene microporous membrane was provided. A nonaqueous electrolyte energy storage device of Example 1 was obtained using the positive electrode, negative electrode, separator, and nonaqueous electrolyte described above.

### [Examples 2 to 11 and Comparative Examples 1 to 5]

Respective nonaqueous electrolyte energy storage devices of Examples 2 to 11 and Comparative Examples 1 to 5 were obtained similarly to Example 1 except that the composition of the nonaqueous solvent was as shown in Table 1. The nonaqueous solvents used are as follows. The viscosity of the nonaqueous electrolyte at 25°C in each nonaqueous electrolyte energy storage device is shown in Table 1.
FEC: Fluoroethylene carbonate
VC: Vinylene carbonate
ETFEE: Ethyl-1,1,2,2-tetrafluoroethyl ether
HFPEE: 1,1,2,3,3,3-hexafluoropropyl ethyl ether
TFETFPE: 1,1,2,2-tetrafluoroethyl-2,2,3,3-tetrafluoropropyl ether

### [Evaluation]

### (Charge-discharge cycle test)

On each of the obtained nonaqueous electrolyte energy storage devices, first, constant current discharge was performed at a current of 0.1 C to 1.0 V as a formation treatment.

Thereafter, constant current charge was performed at a current of 0.1 C up to 3.0 V. Next, constant current discharge was performed at a current of 0.1 C up to 1.0 V. Note that after each of the discharge and the charge, a pause of 10 minutes was provided. The discharge, the charge, and the pause were all carried out in a thermostatic chamber at 25°C.

The amount of electricity per mass of the sulfur active material (simple sulfur) during the discharge after the charge was determined as a discharge capacity (discharge capacity per mass of the sulfur active material). The results are shown in Table 1.

**[Table 1]**

| | Nonaqueous solvent | | | | | Nonaqueous electrolyte | Evaluation |
|---|---|---|---|---|---|---|---|
| | Cyclic carbonate (A) | | Fluorinated ether (B) | | Other fluorinated ethers | Viscosity | Discharge capacity |
| | FEC | VC | ETFEE | HFPEE | TFETFPE | | |
| | vol% | vol% | vol% | vol% | vol% | mPa · s | mAh/g |
| Comparative Example 1 | 50 | 50 | 0 | 0 | 0 | 5.4 | 1,123 |
| Comparative Example 2 | 43 | 43 | 0 | 0 | 13 | 4.9 | 1,162 |
| Comparative Example 3 | 38 | 38 | 0 | 0 | 23 | 4.3 | 1,158 |
| Example 1 | 43 | 43 | 13 | 0 | 0 | 4.1 | 1,214 |
| Example 2 | 40 | 40 | 20 | 0 | 0 | 3.7 | 1,205 |
| Example 3 | 37 | 37 | 26 | 0 | 0 | 3.1 | 1,194 |
| Example 4 | 34 | 34 | 31 | 0 | 0 | 2.9 | 1,190 |
| Comparative Example 4 | 90 | 10 | 0 | 0 | 0 | 7.0 | 989 |
| Example 5 | 78 | 9 | 13 | 0 | 0 | 5.1 | 1,226 |
| Example 6 | 69 | 8 | 23 | 0 | 0 | 4.9 | 1,193 |
| Example 7 | 62 | 7 | 31 | 0 | 0 | 4.7 | 1,234 |
| Comparative Example 5 | 100 | 0 | 0 | 0 | 0 | 8.3 | 933 |
| Example 8 | 87 | 0 | 13 | 0 | 0 | 5.9 | 1,222 |
| Example 9 | 77 | 0 | 23 | 0 | 0 | 4.9 | 1,221 |
| Example 10 | 69 | 0 | 31 | 0 | 0 | 4.2 | 1,221 |
| Example 11 | 38 | 38 | 0 | 23 | 0 | 3.6 | 1,198 |

As shown in Table 1, each of the nonaqueous electrolyte energy storage devices of Examples had a discharge capacity per mass of the sulfur active material of 1,190 mAh/g or more, and the discharge capacity per mass of the sulfur active material was large. In addition, from, for example, the comparison of Comparative Example 1 and Examples 1 to 4 and 11 and the like, it was confirmed that the viscosity of the nonaqueous electrolyte was reduced by including the fluorinated ether (B) in the nonaqueous electrolyte. On the other hand, in Comparative Examples 2 and 3 in which TFETFPE in which two fluorinated alkyl groups are bonded to an oxygen atom was contained in the nonaqueous electrolyte, the viscosity of the nonaqueous electrolyte was reduced, but the discharge capacity per mass of the sulfur active material was not sufficiently increased. It is considered that the fluorinated ether (B) represented by the formula (1) can reduce the viscosity of the nonaqueous electrolyte, and can improve the wettability of the nonaqueous electrolyte to the composite by its molecular structure, and as a result, can sufficiently increase the discharge capacity.

### INDUSTRIAL APPLICABILITY

The present invention can be applied to a nonaqueous electrolyte energy storage device and the like used as power sources for electronic devices such as personal computers and communication terminals, automobiles, and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a positive electrode containing a composite of a sulfur active material and porous carbon, and
a nonaqueous electrolyte containing a nonaqueous solvent, wherein
the nonaqueous solvent contains at least one type of cyclic carbonate selected from a group consisting of a fluorinated cyclic carbonate and an unsaturated cyclic carbonate, and
a fluorinated ether, and
the content of the cyclic carbonate in the nonaqueous solvent is more than 50 vol%, and
the fluorinated ether is represented by the following formula (1):
R¹-O-R² ··· (1)
(in the formula (1), R¹ is a fluorinated alkyl group having the number of carbon atoms of 1 to 3; R² is an alkyl group having the number of carbon atoms of 1 or 2).

2. The nonaqueous electrolyte energy storage device according to claim 1, wherein a content of the fluorinated ether in the nonaqueous solvent is 10 vol% or more and less than 50 vol%.

3. The nonaqueous electrolyte energy storage device according to claim 1 or 2, further comprising a negative electrode containing metallic lithium.

4. The nonaqueous electrolyte energy storage device according to claim 1 or 2, wherein the fluorinated cyclic carbonate contains fluoroethylene carbonate.

5. The nonaqueous electrolyte energy storage device according to claim 1 or 2, wherein the unsaturated cyclic carbonate contains vinylene carbonate.

6. The nonaqueous electrolyte energy storage device according to claim 1 or 2, wherein the fluorinated ether contains at least one type selected from the group consisting of methyl-1,1,2,2-tetrafluoroethyl ether, ethyl-1,1,2,2-tetrafluoroethyl ether, 1,1,2,3,3,3-hexafluoropropyl methyl ether, and 1,1,2,3,3,3-hexafluoropropyl ethyl ether.

7. The nonaqueous electrolyte energy storage device according to claim 1 or 2, wherein a total content of the cyclic carbonate and the fluorinated ether in the nonaqueous solvent is 80 vol% or more.

8. The nonaqueous electrolyte energy storage device according to claim 1 or 2, wherein the nonaqueous electrolyte contains an imide salt.

9. The nonaqueous electrolyte energy storage device according to claim 1 or 2, wherein the nonaqueous electrolyte has a viscosity of 0.5 mPa ·s or more and 6.5 mPa ·s or less at 25°C.

10. A method for manufacturing a nonaqueous electrolyte energy storage device comprising:
providing a positive electrode containing a composite of a sulfur active material and porous carbon, and
providing a nonaqueous electrolyte containing a nonaqueous solvent, wherein,
the nonaqueous solvent contains at least one type of cyclic carbonate selected from a group consisting of a fluorinated cyclic carbonate and an unsaturated cyclic carbonate, and
a fluorinated ether,
the content of the cyclic carbonate in the nonaqueous solvent is more than 50 vol%, and
the fluorinated ether is represented by the following formula (1):
R¹-O-R² ··· (1)
(in the formula (1), R¹ is a fluorinated alkyl group having the number of carbon atoms of 1 to 3; R² is an alkyl group having the number of carbon atoms of 1 or 2).

11. The method for manufacturing the nonaqueous electrolyte energy storage device according to claim 10, wherein the content of the fluorinated ether in the nonaqueous solvent is 10 vol% or more and less than 50 vol%.

12. The method for manufacturing the nonaqueous electrolyte energy storage device according to claim 10 or 11, further comprising providing a negative electrode containing metallic lithium.

13. The method for manufacturing the nonaqueous electrolyte energy storage device according to claim 10 or 11, wherein the fluorinated cyclic carbonate contains fluoroethylene carbonate.

14. The method for manufacturing the nonaqueous electrolyte energy storage device according to claim 10 or 11, wherein the unsaturated cyclic carbonate contains vinylene carbonate.

15. The method for manufacturing the nonaqueous electrolyte energy storage device according to claim 10 or 11, wherein the fluorinated ether contains at least one type selected from the group consisting of methyl-1,1,2,2-tetrafluoroethyl ether, ethyl-1,1,2,2-tetrafluoroethyl ether, 1,1,2,3,3,3-hexafluoropropyl methyl ether, and 1,1,2,3,3,3-hexafluoropropyl ethyl ether.

16. The method for manufacturing the nonaqueous electrolyte energy storage device according to claim 10 or 11, wherein a total content of the cyclic carbonate and the fluorinated ether in the nonaqueous solvent is 80 vol% or more.

17. The method for manufacturing the nonaqueous electrolyte energy storage device according to claim 10 or 11, wherein the nonaqueous electrolyte contains an imide salt.

18. The method for manufacturing the nonaqueous electrolyte energy storage device according to claim 10 or 11, wherein the nonaqueous electrolyte has a viscosity of 0.5 mPa ·s or more and 6.5 mPa ·s or less at 25°C.
